# EUROPÄISCHE PATENTANMELDUNG

(11) **EP 4 759 619 A1**
(43) Veröffentlichungstag der Anmeldung: **17.06.2026**
(21) Anmeldenummer: 25222134.6
(22) Anmeldetag: 10.12.2025
(51) Int. Cl.: B60L 53/16, B60L 53/30, B60L 53/31, H02G 9/06, H02J 7/70

(54) **LADESYSTEM FÜR ELEKTRISCHE SPEICHER**

(30) Priorität: 12.12.2024 DE 102024137488
(71) Anmelder: Pierburg GmbH, 41460 Neuss (DE)
(72) Erfinder: Holl, Daniel, 42549 Velbert (DE); Paffrath, Dr. Holger, 50259 Pulheim (DE); Turan, Alper, 50969 Köln (DE); Kohnen, Wolfgang, 52477 Alsdorf (DE)
(74) Vertreter: Kirschner, Sebastian

(57) **Zusammenfassung**

Ladesystem (1) für elektrische Speicher, insbesondere für Akkumulatoren von Elektrofahrzeugen, mit einem Bordsteinelement (2) und mit einem Ladegerät (3), wobei das Ladegerät (3) in einem Hohlraum (4) des Bordsteinelements (2) angeordnet und mit dem Bordsteinelement (2) verbunden ist, wobei das Ladegerät (3) einen Deckel (5) aufweist, wobei eine an einer Oberseite (OS) des Bordsteinelements ausgebildete Oberseiten-Öffnung (6) des Hohlraumes (4) mittels des Deckels (5) verschlossen ist.

Die Stabilität des Ladesystems (1) ist verbessert und/oder die Belastungen auf das Ladegerät (3) durch Befahren des Ladesystems (1) mit einem Kraftfahrzeug sind verringert, indem der Deckel (5) von einem die Oberseite (OS) des Bordsteinelements (2) bildenden Stegbereich (7) des Bordsteinelements (2) umlaufend umgeben ist.

## Beschreibung

Die Erfindung betrifft ein Ladesystem für elektrische Speicher mit den Merkmalen des Oberbegriffes des Patentanspruchs 1.

Im Zuge der fortschreitenden Elektrifizierung von Kraftfahrzeugen müssen im öffentlichen Raum eine Vielzahl von Ladesystemen für elektrische Speicher der dann als Elektrofahrzeuge ausgeführten Kraftfahrzeuge geschaffen werden. Solche elektrischen Speicher sind insbesondere als Akkumulatoren ausgeführt. Die Ladesysteme weisen u.a. ein ein Ladesteckerteil aufweisendes Ladegerät auf, wobei der elektrische Speicher mit einem Ladekabel mit dem Ladesteckerteil verbindbar ist. Das Ladekabel weist dazu eine weiteres passendes Steckerteil auf. Das Ladegerät ist zur Durchführung eines Ladevorganges des elektrischen Speichers mit einer Energiequelle, insbesondere über ein Stromnetzwerk, elektrisch verbunden oder verbindbar.

Im Stand der Technik sind zur Realisierung solcher Ladesysteme sogenannte Ladesäulen bekannt, welche aufragend von einem befahr- bzw. begehbaren Untergrund angeordnet sind. Solche Ladesäulen nehmen aber einen großen Raum ein und stellen weiterhin ein Verkehrshindernis dar. Um solche Verkehrshindernisse zu vermeiden und den Platzbedarf der Ladesysteme zu verringern, ist es bekannt, Ladesysteme mit einem Bordsteinelement und mit dem Ladegerät vorzusehen, wobei das Ladegerät in einem Hohlraum des Bordsteinelements angeordnet und mit dem Bordsteinelement verbunden ist. Das Ladegerät weist einen Deckel auf. Eine an einer Oberseite des Bordsteinelements ausgebildete Oberseiten-Öffnung des Hohlraumes ist mittels des Deckels verschlossen. Solche Ladesysteme mit Bordsteinelement können dann im öffentlichen Raum konventionelle Bordsteinelemente ohne Ladefunktion ersetzten, so dass durch das derartige Ladesystem kein zusätzlicher Platzbedarf und kein Verkehrshindernis entsteht.

Es ist es denkbar, dass Personen über das Ladesystem hinüberlaufen. Weiterhin soll das Ladesystems den Belastungen durch ein Befahren mit einem Kraftfahrzeug standhalten. Solche Kraftfahrzeuge werden insbesondere auch von einer Straße über eine straßenseitige Oberkante des Ladesystems auf das Ladesystem hinauffahren.

Bei den bekannten Ladesystemen ist diese straßenseitige Oberkante mittels des Deckels des Ladegerätes ausgebildet. Somit wirken hohe Belastungen in einer Vielzahl von Richtungen auf das Ladegerät, insbesondere dessen Deckel, wenn ein Kraftfahrzeug über die straßenseitige Oberkante des Ladesystems auf das Ladesystem hinauffährt.

Bei den bekannten Ladesystemen muss das Bordsteinelement deswegen aus einem hochfesten Sonderbeton gegossen werden und das Ladegerät muss mit Hilfe eines Edelstahlkastens strukturell verstärkt werden, um die notwendige Stabilität des Ladesystems zu erreichen, was mit entsprechend erhöhten Kosten einhergeht. Die Komplexität der Fertigung des Ladesystems ist insbesondere aufgrund des Edelstahlkastens erhöht.

Ladesysteme mit einem Bordsteinelement sind weiterhin durch ihre Anordnung in Bodennähe und somit durch Kontakt mit dem der Abstützung des Bordsteinelements dienendem Erdreich im Außenbereich widrigen Umwelteinflüssen ausgesetzt. Dazu zählen z.B. Wasser, Salz, Schmutz und Eisbildung. Probleme durch Wasser, Salz, Schmutz und Eisbildung können insbesondere an elektrischen Bauteilen, z.B. an dem Ladesteckerteil auftreten. Die elektrischen Bauteile selbst gegen diese Umwelteinflüsse, z.B. durch Kapselung, resistente Materialien, Abdichtungen, etc. zu schützen, bedeutet einen hohen Aufwand, welcher mit entsprechenden Kosten einhergeht. Weiterhin ist die Komplexität und somit auch die notwendige Dauer der Montage dieser Ladesysteme durch solche robusten, gegen die genannten Umwelteinflüsse geschützten Bauteile erhöht. Dichtheitsüberprüfungen des Ladesystems sind nach dessen Montage im Außenbereich, wenn überhaupt, nur mit hohem Aufwand durchführbar.

Der Erfindung liegt nun die Aufgabe zugrunde, das Ladesystem für elektrische Speicher derart auszugestalten und / oder weiterzubilden, dass die Nachteile des Standes der Technik vermieden, zumindest aber verringert sind, wobei insbesondere die Stabilität des Ladesystems verbessert werden soll und/oder die Belastungen auf das Ladegerät durch Befahren des Ladesystem mit einem Kraftfahrzeug verringert werden sollen.

Diese der Erfindung zugrunde liegende Aufgabe wird nun zunächst durch ein Ladesystem für elektrische Speicher mit den Merkmalen des Patentanspruchs 1 gelöst.

Ein Aspekt der Erfindung liegt zunächst im Wesentlichen darin, dass der Deckel von einem die Oberseite des Bordsteinelements bildenden Stegbereich des Bordsteinelements umlaufend umgeben ist.

Somit ist die Stabilität des Ladesystems verbessert. Weiterhin sind die Belastungen auf das Ladegerät verringert, wenn das Ladesystem von einem Kraftfahrzeug befahren wird, insbesondere wenn ein Kraftfahrzeug über eine straßenseitige Oberkante des Ladesystems auf das angrenzend der Straße montierte Ladesystem hinauffährt. Bei diesem Hinauffahren werden die Kräfte dann nicht von dem Ladegerät, sondern von dem Borsteinelement aufgenommen. Durch den Stegbereich des Bordsteinelements ist sichergestellt, dass bei üblichen Belastungsszenarien lediglich vertikale Kräfte von oben auf das Ladegerät wirken. Der Stegbereich ist insbesondere ringförmig entlang einer vorzugsweise im Wesentlichen viereckigen Kontur ausgebildet. Das Bordsteinelement bildet insbesondere einen Positionsrahmen für das Ladegerät.

Gemäß einer bevorzugten Ausführungsform des Ladesystems liegt die Oberfläche des Deckels auf gleicher Höhe wie oder tiefer als die Oberseite des Stegbereichs. Durch die Anordnung auf gleicher Höhe sind Stolperfallen für Fußgänger erfolgreich vermieden. Bei der Anordnung der Oberfläche des Deckels tiefer als die Oberseite des Stegbereichs wird aber auch darauf geachtet, dass keine Stolperfallen für Fußgänger entstehen. Durch die der Anordnung der Oberfläche des Deckels tiefer als die Oberseite des Stegbereichs ist ein besonders guter Schutz des Ladegeräts, insbesondere dessen Deckels, durch den Stegbereich realisiert.

Nach einer weiteren bevorzugten Ausführungsform des Ladesystems bildet der Stegbereich zumindest eine Oberkante des Bordsteinelementes. Insbesondere bildet der Stegbereich alle Oberkanten. Das Bordsteinelement weist insbesondere vier Oberkanten auf, welche zusammen ein Rechteck bilden.

Vorteilhafterweise ist das Ladesystem ausgebildet, angrenzend einer Straße angeordnet zu werden, so dass eine straßenseitige Oberkante des Bordsteinelementes an dem Stegbereich ausgebildet ist. Diese straßenseitige Oberkante ist vorzugsweise eine der vier Oberkanten des Bordsteinelements. Vorteilhafterweise ist das Ladesystem dann auch dazu ausgebildet, dass sich auf der der Straße gegenüberliegenden Seite des Bordsteinelements ein gegenüber der Straße erhöhter Bürgersteig, anschließt.

Es kann vorteilhaft sein, wenn zumindest eine Auflagefläche an dem Bordsteinelement innerhalb des Hohlraums ausgebildet ist, wobei das Ladegerät, insbesondere der Deckel, auf der Auflagefläche aufliegt und über die Auflagefläche abgestützt ist. Von oben auf das Ladegerät wirkende Kräfte sind somit über die Auflagefläche in das Bordsteinelement einleitbar. Die Aufnahmefläche ist dabei so groß, dass der an der Aufnahmefläche durch diese Kraft entstehende Druck die Festigkeit des Materials, aus welchem das Bordsteinelement hergestellt ist, nicht überschreitet.

Gemäß einer vorteilhaften Ausführungsform des Ladesystems ist die Auflagefläche umlaufend ausgebildet. Somit ist ein Verkippen bzw. Rotieren des Ladegerätes zum Bordsteinelement aufgrund von von oben auf das Ladegerät wirkenden Kräften erfolgreich vermieden. Die Auflagefläche ist insbesondere ringförmig entlang einer vorzugsweise im Wesentlichen viereckigen Kontur ausgebildet. Die Auflagefläche liegt horizontal gesehen vorzugsweise innerhalb des Stegbereiches.

Vorzugsweise liegt die Auflagefläche in einer Auflagenflächen-Ebene und/oder ist die Auflagefläche in einer Höhe ausgebildet. Somit ist die Auflagefläche besonders einfach herstellbar. Die Auflagenflächen-Ebene weist einen bestimmten Abstand zur Oberseite des Stegbereiches auf, welcher insbesondere einer Dicke des Deckels entspricht.

Vorteilhafterweise weist die Auflagefläche des Bordsteinelements zumindest eine Verankerungs-Ausnehmung zur Aufnahme eines Verbindungsmittels auf. Das Ladegerät ist mittels des Verbindungsmittels mit dem Bordsteinelement verbunden. Das Verbindungsmittel könnte z.B. eine Schraube sein, welche mit einem in der Verankerungs-Ausnehmung angeordneten Innengewinde zusammenwirkt, wobei das Innengewinde in die Verankerungs-Ausnehmung eingebracht ist oder wobei ein Einsatz mit Innengewinde in der Verankerungs-Ausnehmung angeordnet ist. Vorzugsweise sind zwei Verbindungsmittel vorgesehen, welche den Deckel in zwei einander gegenüberliegenden längsseitigen Endbereichen jeweils durchdringen und welche in jeweils eine von zwei Verankerungs-Ausnehmungen hineinragen.

Bevorzugterweise weist der Stegbereich zumindest eine, insbesondere die straßenseitige Oberkante des Bordsteinelements unterbrechende, Abfluss-Ausnehmung auf. Durch die Abfluss-Ausnehmung hindurch ist eine Flüssigkeit aus dem Hohlraum heraus abführbar. Im montierten Zustand des Ladesystems kann das Ladesystem Regenwasser und/oder Kondenswasser ausgesetzt sein, welches dann über die Abfluss-Ausnehmung abführbar ist. Somit ist eine erforderliche trockene Umgebung für die elektronischen Bauteile des Ladesystems sichergestellt.

Weiter bevorzugt ist eine vorzugsweise u-förmige Abdeckung im Bereich der Abfluss-Ausnehmung an dem Bordsteinelement angeordnet. Die Abfluss-Ausnehmung ist mittels der Abdeckung zur Oberseite des Bordsteinelements hin unter Ausbildung eines Abflusskanals abgedeckt. Durch die Abdeckung kann eine Stolperfalle in der Oberfläche des Stegbereiches vermieden werden. Wenn die Abdeckung u-förmig ausgebildet ist, liegt die Abdeckung vorzugsweise mit an den beiden Schenkeln der u-förmigen Abdeckung ausgebildeten Stirnseiten jeweils auf dem Bordsteinelement im Bereich der Abfluss-Ausnehmung auf. Der Abflusskanal ist vorzugsweise zu einer Horizontalen leicht geneigt ausgebildet, wobei ein angrenzend des Hohlraumes liegender Einlass des Abflusskanals höher liegt als ein an der Außenseite des Bordsteinelementes liegender Auslass des Abflusskanals. Somit kann ein Einströmen der Flüssigkeit in den Abflusskanal aus dem Hohlraum auf höherem Niveau erfolgen als das Abströmen aus dem Abflusskanal zur Umgebung des Bordsteinelementes hin.

Die Oberseite des Bordsteinelements weist vorzugsweise eine Vielzahl von Erhebungen und/oder Ausnehmungen auf, insbesondere zur Erhöhung des Reibkoeffizienten mit Schuhsohlen und/oder Reifen. Das Risiko von Verletzungen von Personen und/oder der Beschädigung von Kraftfahrzeugen, welche mit dem Bordsteinelement in Kontakt kommen bzw. das Bordsteinelement nutzen ist somit minimiert, zumindest aber verringert.

Vorteilhafterweise weist der Hohlraum an der Unterseite des Bordsteinelements eine Unterseiten-Öffnung auf. Das Ladegerät ist vorzugsweise über die Unterseiten-Öffnung vorzugsweise mittels eines Netzkabels mit einer Energiequelle verbindbar oder verbunden. Elektrische Speicher, insbesondere Akkumulatoren von Elektrofahrzeugen, sind dann über das Ladegerät mit der Energiequelle für einen Ladevorgang elektrisch verbindbar.

Das Ladegerät ist vorzugsweise über die Unterseiten-Öffnung vorzugsweise mittels eines Kommunikation-Kabels mit einem Kommunikationsnetzwerk verbindbar oder verbunden. Über ein solches Kommunikationsnetzwerk sind für solche Ladevorgange wichtige Informationen übertragbar. Z.B. können Berechtigungen für den Ladevorgang von einem externen Server an das Ladegerät übertragen werden. Weiterhin ist der Energiebedarf und/oder die Energieverteilung in einem das Ladesystem beinhaltenden Stromnetzwerk durch entsprechende Informationen von dem Ladesystem besonders gut steuer-, regel-, bzw. planbar.

Nach einer weiteren bevorzugten Ausführungsform des Ladesystems weist das Ladegerät ein Ladesteckerteil, ein Anschlusssteckerteil, eine Steuerungs- und/oder Regelungseinrichtung, eine Benutzerschnittstelle, einen Stromzähler und/oder ein Verschlusssystem auf. Durch das vorzugsweise eine Klappe aufweisende Verschlusssystem können die weiteren Elemente des Ladegerätes vor negativen äußeren Einflüssen und auch unrechtmäßigem Gebrauch geschützt werden. Über das Ladesteckerteil ist ein elektrischer Speicher eines Fahrzeugs mit dem Ladegerät zur Durchführung eines Ladevorganges verbindbar. Mittels der Steuerungs- und/oder Regelungseinrichtung ist z.B. das Verschlusssystem ansteuerbar. Über die Benutzerschnittstelle kann sich ein Benutzer authentifizieren, so dass bei erfolgreicher Authentifizierung das Verschlusssystem geöffnet und der Ladevorgang durchgeführt werden kann. Mittels des Stromzählers wird die Menge an Strom gemessen, welche für den Ladevorgang an den Speicher übertragen wird, so dass anhand dieser Menge eine Abrechnung erfolgen kann. Das Ladesteckerteil ist mittels eines Verbindungskabels mit dem Anschlusssteckerteil elektrisch verbunden. Das Anschlusssteckerteil ist dazu vorgesehen, über die Unterseite des Grundkörpers hinweg mit der Energiequelle, insbesondere über das Stromnetzwerk, elektrisch verbunden zu werden. Das Anschlusssteckerteil ist mit dem vorzugsweise unterirdisch verlaufenden Netzkabel des Stromnetzwerkes und somit der mit dem Stromnetzwerk verbundenen Energiequelle verbindbar oder verbunden.

Mittels des ein Bordsteinelement aufweisenden Ladesystems können dann konventionelle Bordsteinelemente ohne Ladefunktion ersetzt, bzw. auch mit weiteren vorzugsweise konventionellen Bordsteinelementen entsprechende Bordsteinkanten gebildet werden. Die hier beschriebenen Bordsteinelemente mit Ladefunktion kommen insbesondere benachbart zu Parkplätzen, wie Straßenparkplätzen, Kunden- und Mitarbeiterparkplätzen und/oder P&R-Parkplätzen zum Einsatz.

Es gibt nun eine Vielzahl von Möglichkeiten, das erfindungsgemäße Ladesystem für elektrische Speicher in vorteilhafter Art und Weise auszugestalten und weiterzubilden. Es darf hierzu zunächst auf die dem Patentanspruch 1 nachgeordneten Patentansprüche verwiesen werden. Im Folgenden wird nun eine bevorzugte Ausgestaltung des erfindungsgemäßen Ladesystems für elektrische Speicher anhand der Zeichnung und der dazugehörigen Beschreibung näher erläutert bzw. beschrieben. In der Zeichnung zeigt:
- Fig.1: in schematischer Darstellung ein Ausführungsbeispiel des Ladesystems für elektrische Speicher in einer dreidimensionalen Ansicht,
- Fig.2: in schematischer Darstellung separat ein Bordsteinelement des Ausführungsbeispiels des Ladesystems aus Fig.1 in einer dreidimensionalen Ansicht,
- Fig.3a: in schematischer Detail-Darstellung eine Abfluss-Ausnehmung des separat dargestellten Bordsteinelements des Ausführungsbeispiels des Ladesystems aus Fig.1 in einer dreidimensionalen Ansicht, und
- Fig.3b: in schematischer Detail-Darstellung die Abfluss-Ausnehmung des Ausführungsbeispiels des Ladesystems aus Fig.1, insbesondere mit der zugehörigen Abdeckung, in einer dreidimensionalen Ansicht.

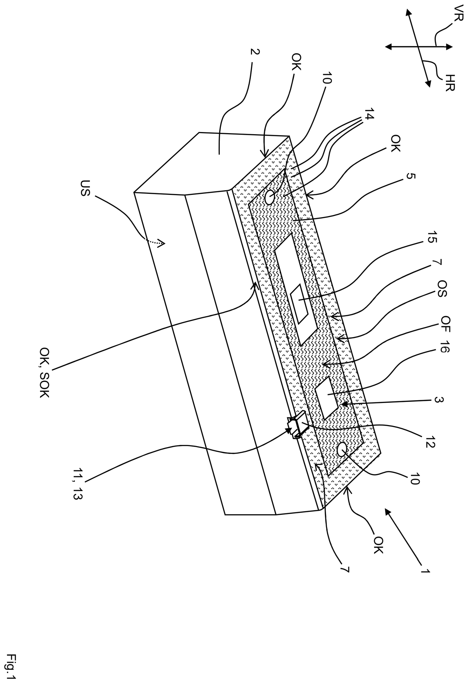

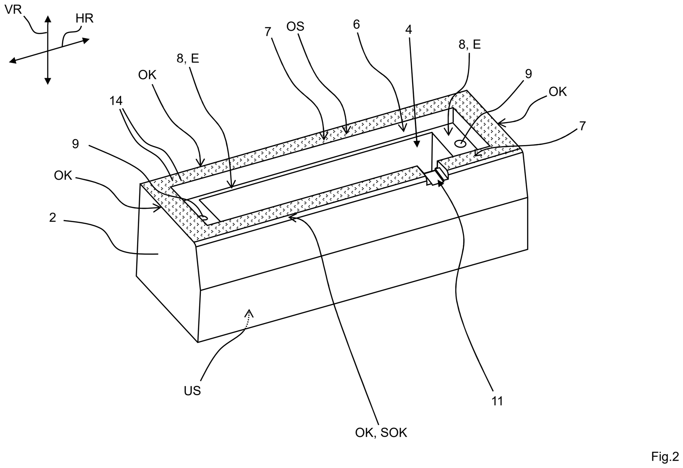

Fig.1 zeigt ein Ladesystem 1 für elektrische Speicher, insbesondere für Akkumulatoren von Elektrofahrzeugen, mit einem Bordsteinelement 2 gemäß Fig.2 und mit einem Ladegerät 3. Das Ladegerät 3 ist in einem Hohlraum 4 des Bordsteinelements 2 angeordnet und mit dem Bordsteinelement 2 verbunden. Das Ladegerät 3 weist einen Deckel 5 auf. Eine an einer Oberseite OS des Bordsteinelements 2 ausgebildete Oberseiten-Öffnung 6 des Hohlraumes 4 ist mittels des Deckels 5 verschlossen. Der Deckel 5 weist in einer Ausgestaltung insbesondere Metall auf und/oder ist in einer Ausgestaltung insbesondere aus Metall hergestellt. Der Deckel 5 ist Teil eines Gehäuses des Ladegerätes 3. An das Ladegerät 3 ist ein elektrischer Speicher, insbesondere ein Akkumulator eines Elektrofahrzeugs, mit einem Ladekabel für einen Ladevorgang anschließbar. Das Ladegerät 3 ist dazu weiterhin mit einer Energiequelle vorzugsweise über ein Stromnetzwerk verbunden oder verbindbar.

Der Deckel 5 ist von einem die Oberseite OS des Bordsteinelements 2 bildenden Stegbereich 7 des Bordsteinelements 2 umlaufend umgeben. Somit ist eine hohe Stabilität des Ladesystems 1 gegeben. Einwirkende Kräfte werden gleichmäßig verteilt, ohne dass punktuell hohe Spannungen auftreten. Es ist somit ausreichend, dass das Bordsteinelement 2 einen üblichen Randsteinbeton aufweist und/oder aus einem üblichen Randsteinbeton hergestellt ist. Es können auch andere Materialien zur Herstellung des Bordsteinelements 2 verwendet werden. Insbesondere ist kein hochfester Sonderbeton notwendig, um die notwendige Stabilität des Bordsteinelements 2 zu gewährleisten. In Fig.1 und Fig.2 sind vertikale Richtungen VR und horizontale Richtungen HR mit Doppelpfeilen dargestellt. Wenn bezüglich der Merkmale des Ladesystems 1 auf diese Richtungen VR, HR Bezug genommen wird, dann wird von einer waagerechten Ausrichtung des Ladesystems 1 ausgegangen, in welcher das Ladesystem 1 vorzugsweise für dessen Betrieb montiert ist. Selbstverständlich ist aber auch denkbar, dass Ladesystem 1 angrenzend einer geneigten Straße, dann ebenfalls geneigt, mit einem Winkel zur Waagerechten zu montieren.

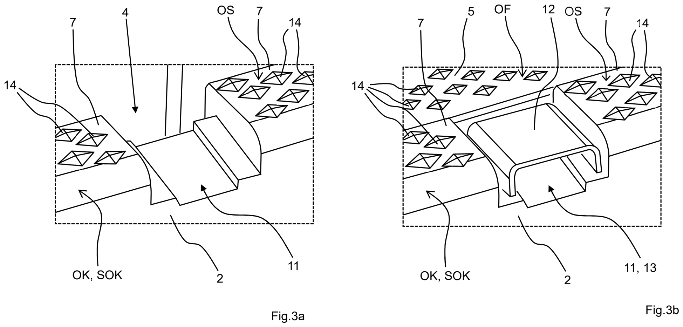

Die Oberfläche OF des Deckels 5 liegt, wie Fig.1 und Fig.3b jeweils zeigt, auf gleicher Höhe wie die Oberseite OS des Stegbereichs 7. Die Oberfläche des Deckels könnte demgegenüber auch tiefer als die Oberseite des Stegbereichs liegen.

Die Oberfläche OF des Deckels 5 weist eine viereckige, vorzugsweise rechteckige Form u.U. mit abgerundeten Ecken auf. Der Stegbereich 7 weist einen viereckigen, vorzugsweise rechteckigen Außenumfang u.U. mit abgerundeten Ecken auf. Zumindest entlang einer der Seiten des Deckels 5 weist der Stegbereich 7 an dessen Oberseite OS einen gleichbleibenden Anstand zwischen der Oberseiten-Öffnung 6 und dem Außenumfang, nämlich insbesondere eine gleichbleibende Breite auf.

Zumindest eine Oberkante OK des Bordsteinelementes 2 ist an dem Stegbereich 7 ausgebildet. Vorzugsweise sind alle Oberkanten OK, nämlich wie hier gezeigt alle vier Oberkanten OK, des Bordsteinelementes 2 an dem Stegbereich 7 ausgebildet. Die Oberkante OK kann abgerundet ausgeführt sein. Die Oberkante OK weist dann einen bestimmten Radius auf.

Das Ladesystem 1 ist ausgebildet, angrenzend einer Straße angeordnet zu werden, so dass eine straßenseitige Oberkante OK, SOK des Bordsteinelementes 2 an dem Stegbereich 7 ausgebildet ist. Insbesondere die straßenseitige Oberkante OK, SOK des Bordsteinelementes 2 ist abgerundet ausgeführt und weist somit einen bestimmten Radius auf, so dass Reifen eines auf das Bordsteinelement 2 auffahrenden Fahrzeugen aufgrund des Radius weniger stark belastet werden, als bei einer eckigen Oberkante.

Vorzugsweise sind die weiteren nicht straßenseitigen Oberkanten OK weniger stark abgerundet und weisen somit einen kleineren Radius auf als die straßenseitige Oberkante SOK. So sind dann kleine Spalte zu zu dem Ladesystem 1 benachbarten, konventionellen Bordsteinelementen ohne Ladefunktion und/oder zu Plattenelementen z.B. eines Bordsteines erzeugbar.

Zumindest eine Auflagefläche 8 ist an dem Bordsteinelement 2 innerhalb des Hohlraums 4 ausgebildet. Das Ladegerät 3, insbesondere der Deckel 5, liegt auf der Auflagefläche 8 auf und ist über die Auflagefläche 8 abgestützt. Das Bordsteinelement 2 weist zur Ausbildung der Auflagefläche 8 eine Stufe auf. Die Auflagefläche 8 weist einen viereckigen, vorzugsweise rechteckigen Innenumfang und/oder Außenumfang u.U. mit jeweils abgerundeten Ecken auf. Zumindest entlang einer der Seiten der Auflagefläche 8 weist die Auflagefläche 8 eine gleichbleibende Breite auf. Die Auflagefläche 8 ist umlaufend ausgebildet. Denkbar wäre demgegenüber auch zwei oder mehr separate Auflageflächen vorzusehen.

Die Auflagefläche 8 liegt in einer Auflagenflächen-Ebene E. Die Auflagefläche 8 ist in einer Höhe ausgebildet. Die Auflagefläche 8 liegt parallel zur Oberseite OS zur des Bordsteinelements 2. Auf den Deckel 5 wirkende Kräfte sind somit vertikal nach unten in das Bordsteinelement 2 einleitbar. Wenn das Bordsteinelement 2 montiert ist, sind die Kräfte dann von dem Bordsteinelement 2 weiter vertikal nach unten in das angrenzende Erdreich ableitbar.

Die Auflagefläche 8 des Bordsteinelements 2 weist zumindest eine Verankerungs-Ausnehmung 9 zur Aufnahme eines Verbindungsmittels 10 auf. Das Ladegerät 3 ist mittels des Verbindungsmittels 10 mit dem Bordsteinelement 2 verbunden. Die Verankerungs-Ausnehmung 9 und das Verbindungsmittel 10 sind vorzugsweise senkrecht zur Oberfläche OF des Deckels 5 ausgerichtet. Als Verbindungsmittel 10 kommen vorzugsweise Schrauben zum Einsatz. Insbesondere sind zwei Verbindungsmittel 10 wie Schrauben und somit auch zwei Verankerungs-Ausnehmungen 9 vorgesehen. Der Einsatz anderer Verbindungsmittel ist auch denkbar.

Der Stegbereich 7 weist zumindest eine, insbesondere die straßenseitige Oberkante OK, SOK des Bordsteinelements 2 unterbrechende, Abfluss-Ausnehmung 11 auf. Durch die Abfluss-Ausnehmung 11 hindurch ist eine Flüssigkeit aus dem Hohlraum 4 heraus abführbar. Im montierten Zustand des Ladesystems 1 ist die Flüssigkeit, insbesondere Wasser, dann aus der Abfluss-Ausnehmung 11 zu einem Fahrbereich einer Straße hin abführbar, wobei der Fahrbereich tiefer liegt als die Abfluss-Ausnehmung 11.

Eine vorzugsweise u-förmige, im Detail in Fig.3b gezeigte, Abdeckung 12 ist im Bereich der Abfluss-Ausnehmung 11 an dem Bordsteinelement 2 angeordnet. Die Abfluss-Ausnehmung 11 ist mittels der Abdeckung 12 zur Oberseite OS des Bordsteinelements 2 hin unter Ausbildung eines Abflusskanals 13 abgedeckt. Die Abdeckung 12 ist mit dem Bordsteinelement 2 verbunden, z.B. verklebt. Die Abdeckung könnte dazu in das Bordsteinelement, insbesondere mit den Schenkeln, hineinragen. Eine nach oben gewandte Oberfläche der Abdeckung 12 liegt auf gleicher Höhe wie die Oberseite OS des Stegbereichs 7 oder tiefer als die Oberseite OS des Stegbereichs 7.

Die Oberseite OS des Bordsteinelements 2 weist eine Vielzahl von Erhebungen und/oder Ausnehmungen 14 auf, insbesondere zur Erhöhung des Reibkoeffizienten mit Schuhsohlen und/oder Reifen. Die Oberfläche OF des Deckels 5 weist ebenso eine Vielzahl von Erhebungen und/oder Ausnehmungen 14 auf, insbesondere auch zur Erhöhung des Reibkoeffizienten mit Schuhsohlen und/oder Reifen. Vorzugsweise sind pyramidenförmige Erhebungen und/oder Ausnehmungen 14 mit vorzugsweise rautenförmiger Grundfläche vorgesehen.

Der Hohlraum 4 weist an der Unterseite US des Bordsteinelements 2 eine hier nicht gezeigte Unterseiten-Öffnung auf. Das Ladegerät 3 ist über die Unterseiten-Öffnung vorzugsweise mittels eines Netzkabels mit einer Energiequelle verbindbar oder verbunden. Das Ladegerät ist über die Unterseiten-Öffnung vorzugsweise mittels eines Kommunikation-Kabels mit einem Kommunikationsnetzwerk verbindbar oder verbunden. Der Hohlraum 4 ist dann insbesondere als eine in vertikaler Richtung ausgebildete Durchgangsöffnung durch das Bordsteinelement 2 ausgebildet. Die Oberseite OS und die Unterseite US des Bordsteinelements 2 liegen parallel zueinander. Das Bordsteinelement 2 weist weiterhin vier Außenflächen auf. Zwei zueinander benachbarte Außenflächen sind im Wesentlichen senkrecht zueinander ausgerichtet, wobei um bis zu 10° von der senkrechten Ausrichtung zueinander abgewichen werden kann. Die an die straßenseitige Oberkante SOK angrenzende Außenfläche weist eine Abschrägung und/oder Fase zur Oberseite OS des Stegbereiches 7 hin auf.

Das Ladegerät 3 weist ein Ladesteckerteil, ein Anschlusssteckerteil, eine Steuerungs- und/oder Regelungseinrichtung, eine Benutzerschnittstelle 15, einen Stromzähler und/oder ein Verschlusssystem 16 auf.

Das Ladegerät 3 ist vorzugsweise mittels des Anschlusssteckerteils und mittels eines Netzkabels mit einer Energiequelle verbindbar oder verbunden. Über das Ladesteckerteil ist der elektrische Speicher, insbesondere eines Elektrofahrzeuges, mit der Energiequelle für einen Ladevorgang z.B. mittels eines Ladekabels verbindbar. Der Deckel 5 weist gemäß Fig.1 Öffnungen für die Benutzerschnittstelle 15 und das Verschlusssystem 16 auf. Die Oberseite des Ladesystems 1 ist dann auch mittels einer Oberfläche der Benutzerschnittstelle 15 und einer Oberfläche des dann geschlossenen Verschlusssystems 16 ausgebildet.

Im Folgenden wird nun ein Ladevorgang eines Elektrofahrzeuges beschrieben. Ein Fahrer des Elektrofahrzeuges parkt zunächst neben und/oder zum Teil über dem Ladesystem 1. Nach einer Autorisierung durch den Fahrer über die Benutzerschnittstelle 15 wird das Verschlusssystem 16 mittels der Steuerungs- und/oder Regelungseinrichtung und mittels eines hier nicht gezeigten Aktuators oder manuell geöffnet. Dann verbindet der Fahrer ein Ladekabel zum einen mit dem Elektrofahrzeug und zum anderen mit dem Ladesteckerteil. Dabei erzeugt der Fahrer eine elektrische Verbindung zwischen einem Steckerteil des Ladekabels und dem Ladesteckerteil. Dann erfolgt ein Laden des elektrischen Speichers des Elektrofahrzeugs. Mittels des Stromzählers wird die Menge an Strom gemessen, welche für den Ladevorgang an den Speicher übertragen wird. Nach oder zum Beenden dieses Ladens trennt der Fahrer die Steckverbindung zwischen dem Ladesteckerteil und dem Steckerteil des Ladekabels. Wenn das Steckerteil des Ladekabels komplett entfernt wurde, wird das Verschlusssystem 16 wieder geschlossen.

### Bezugszeichenliste

- 1: Ladesystem
- 2: Bordsteinelement
- 3: Ladegerät
- 4: Hohlraum des Bordsteinelements 2
- 5: Deckel
- 6: Oberseiten-Öffnung
- 7: Stegbereich
- 8: Auflagefläche
- 9: Verankerungs-Ausnehmung
- 10: Verbindungsmittel
- 11: Abfluss-Ausnehmung
- 12: Abdeckung
- 13: Abflusskanal
- 14: Erhebungen und/oder Ausnehmungen
- 15: Benutzerschnittstelle
- 16: Verschlusssystem

- OS: Oberseite des Bordsteinelements 2 bzw. Stegbereichs 7
- US: Unterseite des Bordsteinelements 2
- OK: Oberkante des Bordsteinelementes 2
- SOK: straßenseitige Oberkante des Bordsteinelementes 2
- OF: Oberfläche des Deckels 5
- E: Auflagenflächen-Ebene

- VR: vertikale Richtung
- HR: horizontale Richtung

## Patentansprüche

1. Ladesystem (1) für elektrische Speicher, insbesondere für Akkumulatoren von Elektrofahrzeugen, mit einem Bordsteinelement (2) und mit einem Ladegerät (3), wobei das Ladegerät (3) in einem Hohlraum (4) des Bordsteinelements (2) angeordnet und mit dem Bordsteinelement (2) verbunden ist, wobei das Ladegerät (3) einen Deckel (5) aufweist, wobei eine an einer Oberseite (OS) des Bordsteinelements (2) ausgebildete Oberseiten-Öffnung (6) des Hohlraumes (4) mittels des Deckels (5) verschlossen ist, **dadurch gekennzeichnet, dass** der Deckel (5) von einem die Oberseite (OS) des Bordsteinelements (2) bildenden Stegbereich (7) des Bordsteinelements (2) umlaufend umgeben ist.

2. Ladesystem (1) nach Anspruch 1, **dadurch gekennzeichnet, dass** die Oberfläche (OF) des Deckels (5) auf gleicher Höhe wie die Oberseite (OS) des Stegbereichs (7) oder tiefer als die Oberseite (OS) des Stegbereichs (7) liegt.

3. Ladesystem (1) nach Anspruch 1 oder 2, **dadurch gekennzeichnet, dass** der Stegbereich (7) zumindest eine Oberkante (OK) des Bordsteinelementes (2) bildet.

4. Ladesystem (1) nach einem der vorangehenden Ansprüche, **dadurch gekennzeichnet, dass** das Ladesystem (1) ausgebildet ist, angrenzend einer Straße angeordnet zu werden, so dass eine straßenseitige Oberkante (OK, SOK) des Bordsteinelementes (2) an dem Stegbereich (7) ausgebildet ist.

5. Ladesystem (1) nach einem der vorangehenden Ansprüche, **dadurch gekennzeichnet, dass** zumindest eine Auflagefläche (8) an dem Bordsteinelement (2) innerhalb des Hohlraums (4) ausgebildet ist, wobei das Ladegerät (3), insbesondere der Deckel (5), auf der Auflagefläche (8) aufliegt und über die Auflagefläche (8) abgestützt ist.

6. Ladesystem (1) nach Anspruch 5, **dadurch gekennzeichnet, dass** die Auflagefläche (8) umlaufend ausgebildet ist.

7. Ladesystem (1) nach Anspruch 5 oder 6, **dadurch gekennzeichnet, dass** die Auflagefläche (8) in einer Auflagenflächen-Ebene (E) liegt und/oder die Auflagefläche (8) in einer Höhe ausgebildet ist.

8. Ladesystem (1) nach einem der Ansprüche 5 bis 7, **dadurch gekennzeichnet, dass** die Auflagefläche (8) des Bordsteinelements (2) zumindest eine Verankerungs-Ausnehmung (9) zur Aufnahme eines Verbindungsmittels (10) aufweist, wobei das Ladegerät (3) mittels des Verbindungsmittels (10) mit dem Bordsteinelement (2) verbunden ist.

9. Ladesystem (1) nach einem der vorangehenden Ansprüche, **dadurch gekennzeichnet, dass** der Stegbereich (7) zumindest eine, insbesondere die straßenseitige Oberkante (OK, SOK) des Bordsteinelements (2) unterbrechende, Abfluss-Ausnehmung (11) aufweist, wobei durch die Abfluss-Ausnehmung (11) hindurch eine Flüssigkeit aus dem Hohlraum (4) heraus abführbar ist.

10. Ladesystem (1) nach Anspruch 9, **dadurch gekennzeichnet, dass** eine vorzugsweise u-förmige Abdeckung (12) im Bereich der Abfluss-Ausnehmung (11) an dem Bordsteinelement (2) angeordnet ist, wobei die Abfluss-Ausnehmung (11) mittels der Abdeckung (12) zur Oberseite (OS) des Bordsteinelements (2) hin unter Ausbildung eines Abflusskanals (13) abgedeckt ist.

11. Ladesystem (1) nach einem der vorangehenden Ansprüche, **dadurch gekennzeichnet, dass** die Oberseite (OS) des Bordsteinelements (2) eine Vielzahl von Erhebungen und/oder Ausnehmungen (14) aufweist, insbesondere zur Erhöhung des Reibkoeffizienten mit Schuhsohlen und/oder Reifen.

12. Ladesystem (1) nach einem der vorangehenden Ansprüche, **dadurch gekennzeichnet, dass** der Hohlraum (4) an der Unterseite (US) des Bordsteinelements (2) eine Unterseiten-Öffnung aufweist, wobei das Ladegerät (3) über die Unterseiten-Öffnung vorzugsweise mittels eines Netzkabels mit einer Energiequelle verbindbar oder verbunden ist und/oder wobei das Ladegerät über die Unterseiten-Öffnung vorzugsweise mittels eines Kommunikation-Kabels mit einem Kommunikationsnetzwerk verbindbar oder verbunden ist.

13. Ladesystem (1) nach einem der vorangehenden Ansprüche, **dadurch gekennzeichnet, dass** das Ladegerät (3) ein Ladesteckerteil, ein Anschlusssteckerteil, eine Steuerungs- und/oder Regelungseinrichtung, eine Benutzerschnittstelle (15), einen Stromzähler und/oder ein Verschlusssystem (16) aufweist.
